# EUROPÄISCHE PATENTSCHRIFT

(11) **EP 4 423 188 B1**
(45) Veröffentlichungstag und Bekanntmachung des Hinweises auf die Patenterteilung: **03.09.2025**
(21) Anmeldenummer: 22793671.3
(22) Anmeldetag: 13.10.2022
(51) Int. Cl.: C08L 21/00, B60C 1/00

(54) **SCHWEFELVERNETZBARE KAUTSCHUKMISCHUNG, VULKANISAT DER KAUTSCHUKMISCHUNG UND FAHRZEUGREIFEN**
SULPHUR CROSS-LINKABLE RUBBER COMPOSITION, VULCANISATE OF SAID RUBBER COMPOSITION AND TIRE
COMPOSITION DE CAOUTCHOUC RETICULABLE AVEC DU SOUFRE, VULCANISATE DE LA-DITE COMPOSITION DE CAOUTCHOUC ET PNEUMATIQUE

(30) Priorität: 27.10.2021 DE 102021212138
(43) Veröffentlichungstag der Anmeldung: 04.09.2024
(73) Patentinhaber: Continental Reifen Deutschland GmbH, 30175 Hannover (DE)
(72) Erfinder: HENGESBACH, Frank, 30175 Hannover (DE); GROSSE, Julia, 30175 Hannover (DE)
(74) Vertreter: Continental Corporation
(86) Internationale Anmeldenummer: PCT/DE2022/200235
(87) Internationale Veröffentlichungsnummer: WO 2023/072348

(56) Entgegenhaltungen:
- EP-A1- 0 610 070
- DE-A1- 19 517 544

## Beschreibung

Die Erfindung betrifft eine schwefelvernetzbare Kautschukmischung, deren Vulkanisat und einen Fahrzeugreifen. Ferner betrifft die Erfindung ein Verfahren zur Herstellung der schwefelvernetzbaren Kautschukmischung sowie die Verwendung der schwefelvernetzbaren Kautschukmischung.

Es ist bekannt, dass Kautschukmischungen für Fahrzeugreifen und andere technische Kautschukartikel Alterungsschutzmittel zugesetzt werden. Eine besondere Rolle spielen dabei die Antioxidantien, zu denen polymerisiertes 2,2,4-Trimethyl-1,2-dihydrochinolin zählt. Im Handel erhältliches 2,2,4-Trimethyl-1,2-dihydrochinolin, abgekürzt TMQ, liegt dabei als Oligomerengemisch vor, wobei der Alterungsschutz insbesondere durch das Dimer und das Trimer erzielt wird.

Nachteilig an Alterungsschutzmitteln ist, dass diese ausblühen können und somit eine Verfärbung der Kautschukartikel bewirken.

Die EP 3517570 A1 offenbart die Verwendung des Alterungsschutzmittels N-Phenyl-N'-(1,3-dimethylbutyl)-p-phenylendiamin (6PPD) in Verbindung mit einem Oligomerengemisch von 2,2,4-Trimethyl-1,2-dihydrochinolin, wobei das Gemisch 61 Gew.-% an Dimeren und Trimeren von 2,2,4-Trimethyl-1,2-dihydrochinolin enthält.

Mit einem derartigen System aus Alterungsschutzmitteln soll eine Verbesserung des Ausblühverhaltens und der Beständigkeit gegenüber Rissen erzielt werden. Gleichzeitig sollen weitere Reifeneigenschaften, wie das Handling-Verhalten, der Nassgriff, das Abriebs- und das Rollwiderstands-Verhalten ebenfalls verbessert sein.

Beim Vergleich der Mischungen, die bei sonst gleichen Bestandteilen entweder ein Gemisch enthaltend 35 Gew.-% an Dimeren und Trimeren von TMQ oder ein Gemisch enthaltend 61 Gew.-% an Dimeren und Trimeren von TMQ enthalten zeigt sich kein Einfluss auf den Rollwiderstand.

Die JP 6642067 B2 offenbart eine Kautschukmischung enthaltend 100 phr Naturkautschuk (NR) und unter anderem ein Oligomerengemisch von 2,2,4-Trimethyl-1,2-dihydrochinolin, wobei das Gemisch 70 bis 97 Gew.-% an Dimeren und Trimeren von 2,2,4-Trimethyl-1,2-dihydrochinolin enthält. Gemäß der JP 6642067 B2 soll damit die Umwandlung von unlöslichem in löslichen Schwefel verhindert werden und damit eine Verbesserung der Stahlkordhaftung durch Verhinderung des Ausblühens von Schwefel kombiniert mit guter Prozessierbarkeit und Hitzebeständigkeit erzielt werden.

Der vorliegenden Erfindung lag nun die Aufgabe zugrunde, eine Kautschukmischung bereitzustellen, die im Vergleich zum Stand der Technik eine weitere Verbesserung im Rollwiderstands-Verhalten und im Handling-Verhalten, insbesondere eine höhere Steifigkeit, aufweist.

Gelöst wird die Aufgabe durch die schwefelvernetzbare Kautschukmischung gemäß Anspruch 1 sowie das Verfahren zur Herstellung einer schwefelvernetzbaren Kautschukmischung nach Anspruch 13.

Es war ebenfalls eine Aufgabe der vorliegenden Erfindung ein Vulkanisat und einen Fahrzeugreifen bereitzustellen, welche ein verbessertes Rollwiderstands-Verhalten und Handling-Verhalten aufweisen.

Gelöst wird diese Aufgabe durch das Vulkanisat nach Anspruch 10 und den Fahrzeugreifen nach Anspruch 11.

Ferner war es eine Aufgabe der vorliegenden Erfindung technische Gummiartikel, wie Bälge, Förderbänder, Luftfedern, Gurte, Riemen oder Schläuche, sowie Schuhsohlen bereitzustellen, die sich durch eine Verbesserung im Handling-Verhalten sowie im Wärmeaufbau auszeichnen.

Gelöst wird diese Aufgabe durch die Verwendung der erfindungsgemäßen schwefelvernetzbaren Kautschukmischung zur Herstellung der genannten technischen Gummiartikel.

Überraschenderweise weist die erfindungsgemäße Kautschukmischung enthaltend eine Kombination aus a) 30 bis 95 phr wenigstens eines Butadien-Kautschuks und c) 0,1 bis 3,0 phr eines Oligomerengemisches von TMQ, wobei das Gemisch 70 bis 100 Gew.-% an Dimeren und Trimeren von TMQ enthält, gegenüber dem Stand der Technik eine weitere Verbesserung im Wärmeaufbau und damit dem Rollwiderstands-Verhalten sowie der Steifigkeit und damit dem Handling-Verhalten auf.

Es ist insbesondere auch ein Vorteil der vorliegenden Erfindung, dass die Menge an eingesetztem Oligomerengemisch von TMQ verringert, insbesondere halbiert, werden kann, wobei gleichzeitig der Rollwiderstand der Kautschukmischung verbessert wird und das Alterungsverhalten gleichbleibt, und damit das Oligomerengemisch in verringerter, insbesondere halbierter, Menge eine vergleichbare Wirkung zeigt.

Gemäß einiger Ausführungsformen ergeben sich zudem sogar überraschenderweise verbesserte Reißeigenschaften, insbesondere verbesserte Ermüdungsbeständigkeiten, insbesondere gegenüber Rissbildung und ggf. Bruch, nach der Alterung.

Von der Erfindung sind sämtliche vorteilhafte Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung umfasst ist.

Im Folgenden werden die Bestandteile der erfindungsgemäßen schwefelvernetzbaren Kautschukmischung näher beschrieben.

Sämtliche Angaben zu den Bestandteilen der erfindungsgemäßen Kautschukmischung jeglicher Abstufung bei der Bevorzugung dieser Merkmale gelten entsprechend ebenfalls für das erfindungsgemäße Verfahren zur Herstellung der schwefelvernetzbaren Kautschukmischung sowie für das erfindungsgemäße Vulkanisat, den erfindungsgemäßen Fahrzeugreifen sowie die erfindungsgemäße Verwendung.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol.

Erfindungsgemäß enthält die Kautschukmischung a) 30 bis 95 phr wenigstens eines Butadien-Kautschuks (= BR, Polybutadien). Hierbei kann es sich prinzipiell um alle dem Fachmann bekannten Typen handeln. Darunter fallen u.a. die sogenannten high-cis- und low-cis-Typen, wobei Polybutadien mit einem cis-Anteil größer oder gleich 90 % als high-cis-Typ und Polybutadien mit einem cis-Anteil kleiner als 90 % als low-cis-Typ bezeichnet wird. Ein low-cis-Polybutadien ist z. B. Li-BR (Lithium-katalysierter Butadien-Kautschuk) mit einem cis-Anteil von 20 bis 50 %. Mit einem high-cis BR werden besonders gute Eigenschaften sowie eine niedrige Hysterese der Kautschukmischung erzielt.

Bevorzugt ist es daher, dass der wenigstens eine Butadien-Kautschuk a) einen cis-1,4-Anteil von 90 bis 98 %, bevorzugt 94 bis 98 %, aufweist.

Die Angaben in % beziehen sich hierbei auf die Monomere der Polymerkette des Polybutadiens.

Der cis-Anteil des Polybutadiens wird mittels ¹³C-NMR (125,77 MHz; Relaxationsagens Cr(acac)₃; Lösungsmittel CDCl₃, Bruker 500 MHz) bestimmt.

Bevorzugt enthält die Kautschukmischung 40 bis 95 phr, besonders bevorzugt 50 bis 95 phr wenigstens eines Butadien-Kautschuks.

Insbesondere mit einer erhöhten Menge wenigstens eines Butadien-Kautschuks, wie insbesondere 50 bis 95 phr, wird die der Erfindung zugrunde liegende Aufgabe besonders gut gelöst.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Bestandteil von Funktionalisierungen können auch Metallatome sein.

Erfindungsgemäß enthält die schwefelvernetzbare Kautschukmischung b) 5 bis 70 phr wenigstens eines weiteren Kautschuks, wobei insbesondere eine weitere Kautschukart gemeint ist.

Dem Fachmann ist klar, dass die Summe der eingesetzten Kautschuke, wie oben bereits ausgeführt, 100 phr beträgt, sodass die Menge an weiterem Kautschuk bzw. weiteren Kautschuken im Falle von 40 bis 95 phr, besonders bevorzugt 50 bis 95 phr, wenigstens eines Butadien-Kautschuks, entsprechend 5 bis 60 phr, besonders bevorzugt 5 bis 50 phr, beträgt.

Bei dem weiteren Kautschuk b) kann es sich prinzipiell um jede dem Fachmann bekannte Kautschukart handeln.

Bevorzugt ist es jedoch, dass der wenigstens eine weitere Kautschuk b) wenigstens ein Dienkautschuk ist.

Eine derartige Kautschukmischung ist besonders gut für Fahrzeugreifen, insbesondere für dessen äußere Bauteile, geeignet.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der weitere Dienkautschuk ist dabei bevorzugt ausgewählt aus der Gruppe bestehend aus natürlichem Polyisopren (NR), synthetischem Polyisopren (IR), epoxidiertem Polyisopren (ENR), Butadien-Isopren-Kautschuk, Styrol-Butadien-Kautschuk (SBR), insbesondere lösungspolymerisiertem Styrol-Butadien-Kautschuk (SSBR) und emulsionspolymerisiertem Styrol-Butadien-Kautschuk (ESBR), Styrol-Isopren-Kautschuk, Flüssigkautschuken mit einem Molekulargewicht M_{w} von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurten, Riemen und Schläuchen, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist.

Ferner ist auch ein Gemisch eines oder mehrerer natürlicher Polyisoprene mit einem oder mehreren synthetischen Polyisopren(en) denkbar.

Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum kok-saghyz; Russischer Löwenzahn).

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und
"Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen / Funktionalisierungen endgruppenmodifiziert und/oder entlang der Polymerketten modifiziert sein.

Besonders bevorzugt ist der Dienkautschuk ausgewählt aus der Gruppe bestehend aus natürlichem Polyisopren (NR) und synthetischem Polyisopren (IR) und Styrol-Butadien-Kautschuk (SBR), wobei der Styrol-Butadien-Kautschuk bevorzugt aus SSBR ausgewählt ist.

Gemäß vorteilhafter Ausführungsformen der Erfindung enthält die Kautschukmischung a) 30 bis 95 phr wenigstens eines Butadien-Kautschuks und b) 5 bis 70 phr wenigstens eines Styrol-Butadien-Kautschuks (SBR), wobei der Styrol-Butadien-Kautschuk bevorzugt aus SSBR ausgewählt ist.

Gemäß weiterer vorteilhafter Ausführungsformen der Erfindung enthält die Kautschukmischung a) 30 bis 95 phr wenigstens eines Butadien-Kautschuks und b) 5 bis 70 phr wenigstens eines Styrol-Butadien-Kautschuks (SBR), wobei der Styrol-Butadien-Kautschuk bevorzugt aus SSBR ausgewählt ist, und wenigstens eines Polyisoprens, welches ausgewählt ist aus natürlichem Polyisopren (NR) und synthetischem Polyisopren (IR), wobei wenigstens ein natürliches Polyisopren bevorzugt ist. Gemäß dieser Ausführungsformen der Erfindung enthält die Kautschukmischung somit mindestens drei verschiedene Polymere, insbesondere bevorzugt BR, NR und SSBR.

Gemäß besonders vorteilhafter Ausführungsformen der Erfindung enthält die Kautschukmischung a) 30 bis 95 phr wenigstens eines Butadien-Kautschuks und b) 5 bis 70 phr wenigstens eines Polyisoprens, welches ausgewählt ist aus natürlichem Polyisopren (NR) und synthetischem Polyisopren (IR), wobei wenigstens ein natürliches Polyisopren bevorzugt ist.

Gemäß besonders vorteilhafter Ausführungsformen der Erfindung enthält die Kautschukmischung a) 40 bis 60 phr, bevorzugt 45 bis 55 phr, insbesondere 50 phr, wenigstens eines Butadien-Kautschuks und b) 40 bis 60 phr, 45 bis 55 phr, insbesondere 50 phr, wenigstens eines natürlichen Polyisoprens (NR).
Hiermit werden überraschenderweise bessere Rollwiderstandseigenschaften und verbesserte Reißeigenschaften, insbesondere verbesserte Ermüdungsbeständigkeiten, insbesondere gegenüber Rissbildung und ggf. Bruch, nach der Alterung, erzielt.

Gemäß besonders vorteilhafter Ausführungsformen der Erfindung enthält die Kautschukmischung als Kautschuk b) 5 bis 40 phr natürliches Polyisopren (NR). Hiermit wird die der Erfindung zugrunde liegende Aufgabe besonders gut gelöst und die Kautschukmischung weist eine optimale Verarbeitbarkeit und optimale weitere Eigenschaften, insbesondere Reißeigenschaften und Abriebverhalten, auf.

Gemäß besonders vorteilhafter Ausführungsformen der Erfindung enthält die schwefelvernetzbare Kautschukmischung a) 60 bis 80 phr wenigstens eines Butadien-Kautschuks und b) 20 bis 40 phr wenigstens eines natürlichen Polyisoprens (NR). Bevorzugt ergibt die Summe der Mengen an Kautschuken a) und b) hierbei 100 phr.

Andernfalls ist nach dem fachmännischen Verständnis klar, dass im Fall einer Mischung enthaltend z. B. 60 phr an Butadien-Kautschuken (BR) und 20 phr an Naturkautschuken (NR) noch 20 phr eines oder mehrerer weitere Kautschuk(e) enthalten sind, sodass die Summe 100 phr ergibt.

Erfindungsgemäß enthält die schwefelvernetzbare Kautschukmischung c) 0,1 bis 3,0 phr eines Oligomerengemisches von 2,2,4-Trimethyl-1,2-dihydrochinolin, wobei das Gemisch 70 bis 100 Gew.-% an Dimeren und Trimeren von 2,2,4-Trimethyl-1,2-dihydrochinolin enthält.

2,2,4-Trimethyl-1,2-dihydrochinolin wird wie oben bereits ausgeführt auch mit "TMQ" abgekürzt.

Im Handel als Alterungsschutzmittel erhältliches
2,2,4-Trimethyl-1,2-dihydrochinolin liegt wie eingangs beschrieben polymerisiert vor, wobei als die beim Alterungsschutz aktiven Bestandteile das Dimer und das Trimer identifiziert wurden.

Nach dem allgemeinen Fachverständnis ist ein "Oligomer" ein Molekül, welches aus "wenigen" (griechisch "oligos" = wenig) Teilen (griechisch "meros" = Teil) aufgebaut ist.

Das erfindungsgemäß in der Kautschukmischung enthaltene Oligomerengemisch c) enthält als Oligomere wenigstens Dimere und Trimere des TMQ.

Bevorzugt enthält das Oligomerengemisch c) 73 bis 100 Gew.-%, bevorzugt 74 bis 100 Gew.-%, besonders bevorzugt 74 bis 95 Gew.-%, ganz besonders bevorzugt 74 bis 85 Gew.-%, an Dimeren und Trimeren von
2,2,4-Trimethyl-1,2-dihydrochinolin.

Hiermit wird die der Erfindung zugrunde liegende Aufgabe besonders gut gelöst.

Für den Fall, dass das Oligomerengemisch weniger als 100 Gew.-% an Dimeren und Trimeren von 2,2,4-Trimethyl-1,2-dihydrochinolin enthält, sind weitere Substanzen in dem Gemisch enthalten.

Die weiteren Substanzen umfassen insbesondere Nebenprodukte mit verringerter Alterungsschutzaktivität, insbesondere Tetramere und höhere Homologe, Anilin, Isopropyliden Bis Anilin, das Monomer 2,2,4-Trimethyl-1,2-dihydrochinolin.

Bevorzugt enthält das Oligomerengemisch die Substanz Isopropyliden Bis Anilin in einer Menge von weniger als 0,05 Gew.-%, weiter bevorzugt weniger als 0,02 Gew.-%, besonders bevorzugt weniger als 0,01 Gew.-%, wiederum bevorzugt 0 bis 0,0099 Gew.-%.

Hiermit wird die der Erfindung zugrunde liegende Aufgabe besonders gut gelöst.

Bevorzugt enthält das Oligomerengemisch das Monomer
2,2,4-Trimethyl-1,2-dihydrochinolin in einer Menge von weniger als 0,7 Gew.-%, weiter bevorzugt 0 bis 0,5 Gew.-%.

Hiermit wird die der Erfindung zugrunde liegende Aufgabe besonders gut gelöst.

Bevorzugt enthält die Kautschukmischung das Oligomerengemisch c) in einer Menge von 0,2 bis 3 phr, besonders bevorzugt 0,2 bis 2,5 phr, ganz besonders bevorzugt 0,4 bis 2,2 phr.

Mit derartigen bevorzugten, besonders bevorzugten und ganz besonders bevorzugten Mengen wird die der Erfindung zugrunde liegende Aufgabe besonders gut gelöst. Dabei ergeben sich insbesondere verbesserte

Rollwiderstandseigenschaften bei gleicher Alterungsschutzwirkung.

Bevorzugt enthält die Kautschukmischung d) wenigstens einen Füllstoff, bevorzugt in Mengen von 20 bis 500 phr, besonders bevorzugt 20 bis 400 phr, wiederum bevorzugt 20 bis 180 phr, ganz besonders bevorzugt 45 bis 180 phr.

Bevorzugt ist der Füllstoff ein verstärkender Füllstoff, der bevorzugt ausgewählt ist aus der Gruppe bestehend aus Rußen und Siliciumdioxid.

Gemäß vorteilhafter Ausführungsformen enthält die erfindungsgemäße Kautschukmischung 20 bis 500 phr, besonders bevorzugt 20 bis 400 phr, wiederum bevorzugt 20 bis 180 phr, ganz besonders bevorzugt 45 bis 180 phr, wenigstens eines Rußes.

Der wenigstens eine Ruß ist bevorzugt ausgewählt aus Industrierußen und Pyrolyse-Rußen, wobei Industrieruße weiter bevorzugt sind.

Als Ruße kommen alle dem Fachmann bekannten Rußtypen in Frage.

Bevorzugt hat der Ruß eine Jodzahl, gemäß ASTM D 1510, die auch als Jodadsorptionszahl bezeichnet wird, zwischen 30 und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100 g, besonders bevorzugt 90 bis 200 ml/100g.

Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst.

Besonders geeignet und bevorzugt ist dabei ein Ruß mit einer Jodadsorptionszahl zwischen 80 und 110 g/kg und einer DBP-Zahl von 100 bis 130 ml/100g, wie insbesondere Ruße des Types N339.

Gemäß vorteilhafter Ausführungsformen enthält die erfindungsgemäße Kautschukmischung 20 bis 500 phr, besonders bevorzugt 20 bis 400 phr, wiederum bevorzugt 20 bis 180 phr, wenigstens eines Siliciumdioxids.

Das Siliciumdioxid ist bevorzugt amorphes Siliciumdioxid, beispielsweise gefällte Kieselsäure, die auch als gefälltes Siliciumdioxid bezeichnet wird. Alternativ kann aber beispielsweise auch pyrogenes Siliciumdioxid eingesetzt werden. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 115 bis 200 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Ferner kann auch Kieselsäure, die aus dem Rückstand der Verbrennung von Reisschalen gewonnen wurde, verwendet werden.

Die Kautschukmischung kann zudem weitere Füllstoffe enthalten, die verstärkend wirken oder nicht verstärkend wirken.

Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z. B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
e) weitere Alterungsschutzmittel, wie z. B. Diamine, wie N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-(1,4-dimethylpentyl)-N'-phenyl-p-phenylendiamin (7PPD), N-Isopropyl-N'-phenyl-p-phenylendiamin (IPPD), und/oder substituierte Bisphenole, wie 2,2'-Methylenbis(4-methyl-6-tert-butylphenol) (BPH), und/oder substituierte Phenole, wie Butylhydroxytoluol (BHT),
f) Aktivatoren, wie z. B. Zinkoxid und Fettsäuren (z. B. Stearinsäure) und/oder sonstige Aktivatoren, wie Zinkkomplexe wie z. B. Zinkethylhexanoat,
g) Aktivatoren und/oder Agenzien für die Anbindung von Füllstoffen, insbesondere Ruß oder Siliciumdioxid, wie beispielsweise S-(3-Aminopropyl)Thioschwefelsäure und/oder deren Metallsalze (Anbindung an Ruß) sowie Silan-Kupplungsagenzien (Anbindung an Siliciumdioxid, insbesondere Kieselsäure),
h) Ozonschutzwachse,
i) Harze, wie insbesondere Phenolharze, insbesondere als Klebharze,
j) Mastikationshilfsmittel, wie z. B. 2,2'-Dibenzamidodiphenyldisulfid (DBD) und
k) Prozesshilfsmittel, wie insbesondere Fettsäureester und Metallseifen, wie z. B. Zinkseifen und/oder Calciumseifen
l) Weichmacher, wie insbesondere wie aromatische, naphthenische oder paraffinische Mineralölweichmacher, wie z. B. MES (Mild Extraction Solvate) oder RAE (Residual Aromatic Extract) oder TDAE (Treated Distillate Aromatic Extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt.

Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenischen Ölen.

Gemäß vorteilhafter Ausführungsformen der Erfindung enthält die schwefelvernetzbare Kautschukmischung e) wenigstens ein weiteres Alterungsschutzmittel, besonders bevorzugt ausgewählt aus der Gruppe der Diamine, wie beispielsweise N-Phenyl-N'-(1,3-dimethylbutyl)-p-phenylendiamin (6PPD).

Gemäß vorteilhafter Ausführungsformen der Erfindung enthält die schwefelvernetzbare Kautschukmischung weitere Alterungsschutzmittel e) in einer Menge von 0,5 bis 4 phr, besonders bevorzugt 0,5 bis 2,5 phr.

Gemäß vorteilhafter Ausführungsformen der Erfindung enthält die schwefelvernetzbare Kautschukmischung kein weiteres Alterungsschutzmittel, insbesondere 0 phr an Diaminen, wie beispielsweise N-Phenyl-N'-(1,3-dimethylbutyl)-p-phenylendiamin (6PPD).

Bei den Silan-Kupplungsagenzien kann es sich um alle dem Fachmann bekannten Typen handeln.

Ferner können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen des Siliciumdioxids, insbesondere der Kieselsäure, oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung).

Aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, wie insbesondere 3-Octanoylthio-1-propyltriethoxysilan, oder solche, die unter dem Namen VP Si 363^{®} von der Firma Evonik Industries vertrieben werden.

Der Mengenanteil der Gesamtmenge an weiteren Zusatzstoffen beträgt bevorzugt 3 bis 150 phr, besonders bevorzugt 3 bis 100 phr und ganz besonders bevorzugt 5 bis 80 phr.

Im Gesamtmengenanteil der weiteren Zusatzstoffe kann Zinkoxid (ZnO) in den oben genannten Mengen enthalten sein.

Hierbei kann es sich um alle dem Fachmann bekannten Typen an Zinkoxid handeln, wie z. B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z. B. so genannte "nano-Zinkoxide", verwendet werden.

Die erfindungsgemäße Kautschukmischung wird bevorzugt vulkanisiert verwendet, insbesondere in Fahrzeugreifen oder anderen vulkanisierten technischen Gummiartikeln.

Die Begriffe "vulkanisiert" und "vernetzt" werden im Rahmen der vorliegenden Erfindung synonym verwendet.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern. Bevorzugt ist die Verwendung wenigstens eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS), N-tert-Butyl-2-benzothiazylsulfenamid (TBBS), N-tert-Butyl-2-benzothiazolsulfenimid (TBSI), und/oder wenigstens eines Guanidin-Beschleunigers, wie Diphenylguanidin (DPG).

Insbesondere können auch zwei oder mehrere Beschleuniger eingesetzt werden.

Als schwefelspendende Substanz können dabei alle dem Fachmann bekannten schwefelspendenden Substanzen verwendet werden.

Ferner kann in der Kautschukmischung eines oder mehrere

Reversionsschutzmittel, wie beispielsweise 1,6-Bis(N,N-dibenzylthiocarbamoyldithio)hexan, Hexamethylen-1,6-bis(thiosulfat) Dinatriumsalz-Dihydrat,
und/oder Tetrabenzylthiuramdisulfid (TBzTD), eingesetzt werden.

Außerdem können in der Kautschukmischung Vulkanisationsverzögerer vorhanden sein.

Die Herstellung der Kautschukmischung erfolgt ansonsten nach dem in der Kautschukindustrie üblichen Verfahren, bei dem zunächst in einer oder mehreren Mischstufen eine Grundmischung mit allen Bestandteilen außer dem Vulkanisationssystem (z. B. Schwefel und vulkanisationsbeeinflussende Substanzen) hergestellt wird. Durch Zugabe des Vulkanisationssystems in einer letzten Mischstufe wird die Fertigmischung erzeugt.

Die Fertigmischung wird z. B. durch einen Extrusionsvorgang oder Kalandrieren weiterverarbeitet und in die entsprechende Form gebracht.

Die erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem äußeren Bauteil, insbesondere und bevorzugt im Hornprofil, Laufstreifen und/oder der Seitenwand. Im Falle eines Laufstreifens mit Cap/Base-Konstruktion wird die erfindungsgemäße Kautschukmischung bevorzugt wenigstens in der Cap verwendet.

Zur Verwendung in Fahrzeugreifen wird die Mischung als Fertigmischung vor der Vulkanisation in die entsprechende Form, bevorzugt eines Hornprofils, einer Seitenwand und/oder eines Laufstreifens, gebracht und bei der Herstellung des Fahrzeugreifenrohlings wie bekannt aufgebracht.

Die Herstellung der erfindungsgemäßen Kautschukmischung zur Verwendung als sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die sonstigen Bauteile eines Reifens bezeichnet, wie im Wesentlichen Trennplatte, Innenseele (Innenschicht), Kernprofil, Gürtel, Schulter, Gürtelprofil, Karkasse, Wulstverstärker, Wulstprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z. B. synthetische Fasern oder Stahlcorde, versehen.

Anschließend erfolgt die Weiterverarbeitung durch Vulkanisation.

Ein Gegenstand der vorliegenden Erfindung ist wie eingangs bereits ausgeführt auch ein Vulkanisat, welches durch Schwefelvulkanisation wenigstens einer erfindungsgemäßen Kautschukmischung inklusive sämtlicher bevorzugter Merkmale erhalten ist.

Ein weiterer Gegenstand der vorliegenden Erfindung ist wie eingangs bereits ausgeführt auch ein Fahrzeugreifen, der in wenigstens einem Bauteil wenigstens ein erfindungsgemäßes Vulkanisat inklusive sämtlicher bevorzugter Merkmale aufweist.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Bevorzugt ist ein erfindungsgemäßer Fahrzeugreifen, der wenigstens ein erfindungsgemäßes Vulkanisat inklusive sämtlicher bevorzugter Merkmale wenigstens in einem äußeren Bauteil, bevorzugt im Hornprofil, Laufstreifen und/oder der Seitenwand, aufweist.

Ein weiterer Gegenstand der vorliegenden Erfindung ist wie eingangs bereits ausgeführt auch ein Verfahren zur Herstellung der erfindungsgemäßen schwefelvernetzbaren Kautschukmischung inklusive sämtlicher bevorzugter Merkmale umfassend wenigstens die folgenden Verfahrensschritte:
X1) Bereitstellen von a) 30 bis 95 phr wenigstens eines Butadien-Kautschuks; und
X2) Bereitstellen von b) 5 bis 70 phr wenigstens eines weiteren Kautschuks; und
X3) Bereitstellen von c) 0,1 bis 3,0 phr eines Oligomerengemisches von 2,2,4-Trimethyl-1,2-dihydrochinolin, wobei das Gemisch 70 bis 100 Gew.-% an Dimeren und Trimeren von 2,2,4-Trimethyl-1,2-dihydrochinolin enthält; und
X4) Vermischen der Bestandteile aus den Schritten X1), X2) und X3),
wobei sich die Angaben in phr auf 100 Gewichtsteile der gesamten Masse aller Kautschuke in der hergestellten schwefelvernetzbaren Kautschukmischung beziehen.

Bevorzugt erfolgt das Vermischen gemäß Schritt X4) in wenigstens einer Grundmischstufe.

Ein weiterer Gegenstand der vorliegenden Erfindung ist wie eingangs bereits ausgeführt die Verwendung der erfindungsgemäßen schwefelvernetzbaren Kautschukmischung inklusive sämtlicher bevorzugter Merkmale zur Herstellung von technischen Gummiartikeln, wie Bälge, Förderbänder, Luftfedern, Gurte, Riemen oder Schläuche, sowie Schuhsohlen.

Die Erfindung soll nun anhand von Vergleichs- und Ausführungsbeispielen, die in den nachfolgenden Tabellen zusammengefasst sind, näher erläutert werden. Sämtliche Mengenangaben in den Tabellen sind in phr angegeben, sofern nichts anderes angegeben ist.

### Verwendete Substanzen

1) Hoch-cis Butadien-Kautschuk, Co-BR, cis-1,4-Anteil 95 %
2) Gemisch TMQ: 43 Gew.-% an Dimeren und Trimeren von 2,2,4-Trimethyl-1,2-dihydrochinolin, 0,1 Gew.-% Isopropyliden Bis Anilin, 1,0 Gew.-% Monomer 2,2,4-Trimethyl-1,2-dihydrochinolin; Vulkanox^{®}, Fa. Lanxess
3) Gemisch TMQ: 75,5 Gew.-% an Dimeren und Trimeren von 2,2,4-Trimethyl-1,2-dihydrochinolin, weniger als 0,01 Gew.-% Isopropyliden Bis Anilin, 0,5 Gew.-% Monomer 2,2,4-Trimethyl-1,2-dihydrochinolin; Sirantech^{™} S-TMQ, Fa. Jiangsu Sinorgchem Technology
4) Ölverstreckter Schwefel: 33 Gew.-% Öl, 67 Gew.-% Schwefel
5) Kieselsäure: Zeosil^{®} 1165MP, Fa. Solvay
6) Silan: Si 266 ^{®}, Fa. Evonik, enthält TESPD (Bis[3-triethoxysilyl)propyl]disulfid)
7) Stahlcord-Haftsystem: Summe aus Cobalt-Stearat, Resorcin-Vorkondensat und Hexamethoxymethylmelamin-Harz (HMMM-65 %)
8) Kieselsäure: Ultrasil^{®} VN 3 GR, Fa. Evonik
9) Kohlenwasserstoffharz OPPERA PR 373N, Fa. ExxonMobil Chemical
10) Niedrig-cis Butadien-Kautschuk, cis-1,4-Anteil 39 %

Die Mischungsherstellung erfolgte nach dem in der

Kautschukindustrie üblichen Verfahren unter üblichen Bedingungen in mindestens drei Stufen in einem Labormischer mit 300 Milliliter bis 3 Liter Volumen, bei dem zunächst in den ersten Mischstufen (Grundmischstufen) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden.

Bei V3 und V4 wurde zuvor zusätzlich noch eine Mastifikation durchgeführt, bei der der Naturkautschuk, Zinkoxid und geringe Teile des Füllstoffs vorgemischt wurden.

In einer weiteren Stufe wurden die Mischungen aus der jeweils vorherigen Stufe noch einmal durchmischt.

Durch Zugabe des Vulkanisationssystems in der dritten oder vierten (V3 und V4) Stufe (Fertigmischstufe) wurde die Fertigmischung erzeugt, wobei für 180 bis 300 Sekunden bei 90 bis 120 °C gemischt wurde.

Aus sämtlichen Mischungen wurden Prüfkörper durch Vulkanisation nach t95 bis t100 (gemessen am Moving Die Rheometer gemäß ASTM D 5289-12/ ISO 6502) unter Druck bei 160°C bis 170 °C hergestellt und mit diesen Prüfkörpern für die Kautschukindustrie typische Materialeigenschaften mit den im Folgenden angegebenen Testverfahren ermittelt.
- Shore Härte bei Raumtemperatur (RT) gemäß ISO 868, DIN 53 505
- Rückprallelastizität bei 70 °C gemäß ISO 4662 oder ASTM D 1054
- Spannungswert bei 100% Dehnung bei Raumtemperatur (M100 RT) gemäß DIN 53 504
- Dynamischer Speichermodul E' bei 55 °C aus dynamisch-mechanischer Messung gemäß DIN 53 513, Dehnungsdurchlauf (engl. "strain sweep") bei 8 % Dehnung (E' (8%))
- maximaler (max.) Verlustfaktor Tan d, synonym zu tangens delta, tan δ, bei 55 °C aus dynamisch-mechanischer Messung gemäß DIN 53 513, Dehnungsdurchlauf (engl. "strain sweep")

Die Proben V2 und E2 wurden zudem für 14 Tage bei 80 °C gealtert und anschließend die Ermüdungsbeständigkeit gegenüber Rissbildung und ggf. Bruch der Probe bei dynamischer Belastung bestimmt:
• Monsanto Ermüdungstest FTF: "Fatigue to Failure" bei 61 % Vordehnung und Raumtemperatur, Angabe in kc (Kilozyklen), in Anlehnung an die Methode ASTM D4482
• Ermüdungstest LTA: "Life time analysis" bei 10 % Vordehnung und Raumtemperatur, Angabe in kc (Kilozyklen), Risswachstumstest mit Anriss unter dynamischer Belastung; in Anlehnung an Monsanto Ermüdungstest FTF

**Tabelle 1**

| **Bestandteil** | **Einheit** | **V1** | **E1** |
|---|---|---|---|
| NR TSR | phr | 30 | 30 |
| BR ¹⁾ | phr | 70 | 70 |
| Ruß N339 | phr | 70 | 70 |
| RAE | phr | 5 | 5 |
| ZnO | phr | 3 | 3 |
| Stearinsäure | phr | 2 | 2 |
| Phenolharz | phr | 5 | 5 |
| 6PPD | phr | 2 | 2 |
| Ozonschutzwachs | phr | 2 | 2 |
| Gemisch TMQ ²⁾ | phr | 4 | - |
| Gemisch TMQ ³⁾ | phr | - | 2 |
| TBBS | phr | 2,5 | 2,5 |
| Schwefel ⁴⁾ | phr | 3,73 | 3,73 |

| **Eigenschaften** | | | |
|---|---|---|---|
| Shore Härte RT | Shore A | 74 | 75 |
| Rückprall 70 °C | % | 56,5 | 58,3 |
| M 100 RT | MPa | 4,6 | 5,2 |
| E' (8%) | MPa | 8,9 | 9,7 |
| Tan d (max) | | 0,198 | 0,182 |

**Tabelle 2**

| **Bestandteil** | **Einheit** | **V2** | **E2** |
|---|---|---|---|
| NR TSR | phr | 50 | 50 |
| BR ¹⁾ | phr | 50 | 50 |
| Kieselsäure ⁵⁾ | phr | 46 | 46 |
| Silan ⁶⁾ | phr | 3,3 | 3,3 |
| TDAE | phr | 5 | 5 |
| ZnO | phr | 3 | 3 |
| Stearinsäure | phr | 2 | 2 |
| Phenolharz | phr | 2 | 2 |
| 6PPD | phr | 2 | 2 |
| Ozonschutzwachs | phr | 2 | 2 |
| Gemisch TMQ ²⁾ | phr | 4 | - |
| Gemisch TMQ ³⁾ | phr | - | 2 |
| DPG | phr | 2 | 2 |
| TBBS | phr | 1,5 | 1,5 |
| Schwefel | phr | 1,5 | 1,5 |

| **Eigenschaften** | | | |
|---|---|---|---|
| Shore Härte RT | Shore A | 60 | 60 |
| Rückprall 70 °C | % | 65,7 | 66,4 |
| M 100 RT | MPa | 1,9 | 1,9 |
| E' (8%) | MPa | 4,8 | 4,9 |
| Tan d (max) | | 0,093 | 0,082 |

| **Eigenschaften nach Alterung (14 Tage, 80 °C)** | | | |
|---|---|---|---|
| Monsanto FTF RT 61 % Vordehnung | kc | 636 | 849 |
| LTA RT 10 % Vordehnung | kc | 333 | 2.000 (Testende) |

**Tabelle 3**

| **Bestandteil** | **Einheit** | **V3** | **V4** |
|---|---|---|---|
| NR TSR | phr | 100 | 100 |
| Ruß N339 | phr | 62 | 62 |
| TDAE | phr | 2 | 2 |
| ZnO | phr | 7 | 7 |
| Phenolharz | phr | 1 | 1 |
| 6PPD | phr | 2 | 2 |
| Gemisch TMQ ²⁾ | phr | 4 | - |
| Gemisch TMQ ³⁾ | phr | - | 2 |
| Haftsystem ⁷⁾ | phr | 9,8 | 9,8 |
| DCBS | phr | 0,75 | 0,75 |
| Schwefel ⁴⁾ | phr | 6,75 | 6,75 |

| **Eigenschaften** | | | |
|---|---|---|---|
| Shore Härte RT | Shore A | 78 | 80 |
| Rückprall 70 °C | % | 49,2 | 49,1 |
| M 100 RT | MPa | 5,0 | 5,3 |
| Tan d (max) | | 0,176 | 0,175 |

**Tabelle 4**

| **Bestandteil** | **Einheit** | **V5** | **V6** |
|---|---|---|---|
| NR TSR | phr | 50 | 50 |
| SSBR | phr | 50 | 50 |
| Ruß N121 | phr | 5 | 5 |
| Kieselsäure ⁸⁾ | phr | 60 | 60 |
| Silan ⁶⁾ | phr | 5 | 5 |
| Harz ⁹⁾ | phr | 15 | 15 |
| ZnO | phr | 2,5 | 2,5 |
| Stearinsäure | phr | 2 | 2 |
| 6PPD | phr | 1,5 | 1,5 |
| Ozonschutzwachs | phr | 2 | 2 |
| Gemisch TMQ ²⁾ | phr | 1,5 | - |
| Gemisch TMQ ³⁾ | phr | - | 0,75 |
| CBS | phr | 2 | 2 |
| Schwefel | phr | 1,5 | 1,5 |

| **Eigenschaften** | | | |
|---|---|---|---|
| Shore Härte RT | Shore A | 56 | 57 |
| Rückprall 70 °C | % | 56,3 | 55,7 |
| M 100 RT | MPa | 1,3 | 1,4 |
| Tan d (max) | | 0,140 | 0,140 |

**Tabelle 5**

| **Bestandteil** | **Einheit** | **V7** | **E3** | **V8** | **E4** | **V9** | **E5** |
|---|---|---|---|---|---|---|---|
| NR TSR | phr | 30 | 30 | 70 | 70 | 70 | 70 |
| BR ¹⁾ | phr | - | - | 30 | 30 | 30 | 30 |
| BR ¹⁰⁾ | phr | 70 | 70 | - | - | - | - |
| Ruß N339 | phr | 70 | 70 | 70 | 70 | 70 | 70 |
| RAE | phr | 5 | 5 | 5 | 5 | 5 | 5 |
| ZnO | phr | 3 | 3 | 3 | 3 | 3 | 3 |
| Stearinsäure | phr | 2 | 2 | 2 | 2 | 2 | 2 |
| Phenolharz | phr | 5 | 5 | 5 | 5 | 5 | 5 |
| 6PPD | phr | 2 | 2 | 2 | 2 | 2 | 2 |
| Ozonschutzwachs | phr | 2 | 2 | 2 | 2 | 2 | 2 |
| Gemisch TMQ ²⁾ | phr | 4 | - | 4 | - | 1,5 | - |
| Gemisch TMQ ³⁾ | phr | - | 2 | - | 2 | - | 0,75 |
| TBBS | phr | 2,5 | 2,5 | 2,5 | 2,5 | 2,5 | 2,5 |
| Schwefel ⁴⁾ | phr | 3,73 | 3,73 | 3,73 | 3,73 | 3,73 | 3,73 |

| **Eigenschaften** | | | | | | | |
|---|---|---|---|---|---|---|---|
| Shore Härte RT | Shore A | 75,5 | 76,5 | 74,7 | 74,8 | 75,5 | 75,8 |
| Rückprall 70 °C | % | 55,1 | 56 | 51,7 | 52,9 | 53,3 | 53,6 |
| M 100 RT | MPa | 5,0 | 5,4 | 4,5 | 4,9 | 5,1 | 5,2 |
| E' (8%) | MPa | | | 8,7 | 9,1 | 9,7 | 10,4 |
| Tan d (max) | | 0,193 | 0,185 | 0,195 | 0,184 | 0,189 | 0,182 |

**Tabelle 6**

| **Bestandteil** | **Einheit** | **V10** | **E6** | **V11** | **E7** | **V12** | **E8** | **V13** | **E9** |
|---|---|---|---|---|---|---|---|---|---|
| NR TSR | phr | - | - | - | - | 20 | 20 | 20 | 20 |
| BR ¹⁾ | phr | 50 | 50 | 50 | 50 | 30 | 30 | 30 | 30 |
| SSBR | phr | 50 | 50 | 50 | 50 | 50 | 50 | 50 | 50 |
| Ruß N339 | phr | 70 | 70 | 70 | 70 | 70 | 70 | 70 | 70 |
| RAE | phr | 5 | 5 | 5 | 5 | 5 | 5 | 5 | 5 |
| ZnO | phr | 3 | 3 | 3 | 3 | 3 | 3 | 3 | 3 |
| Stearinsäure | phr | 2 | 2 | 2 | 2 | 2 | 2 | 2 | 2 |
| Phenolharz | phr | 5 | 5 | 5 | 5 | 5 | 5 | 5 | 5 |
| 6PPD | phr | 2 | 2 | 2 | 2 | 2 | 2 | 2 | 2 |
| Ozonschutzwachs | phr | 2 | 2 | 2 | 2 | 2 | 2 | 2 | 2 |
| Gemisch TMQ ²⁾ | phr | 4 | - | 1,5 | - | 4 | - | 1,5 | - |
| Gemisch TMQ ³⁾ | phr | - | 2 | - | 0,75 | - | 2 | - | 0,75 |
| TBBS | phr | 2,5 | 2,5 | 2,5 | 2,5 | 2,5 | 2,5 | 2,5 | 2,5 |
| Schwefel ⁴⁾ | phr | 3,73 | 3,73 | 3,73 | 3,73 | 3,73 | 3,73 | 3,73 | 3,73 |

| **Eigenschaften** | | | | | | | | | |
|---|---|---|---|---|---|---|---|---|---|
| Shore Härte RT | Shore A | 76,8 | 77,1 | 77,3 | 77,8 | 75,3 | 76 | 76,7 | 76,7 |
| Rückprall 70 °C | % | 54,3 | 55,7 | 55,8 | 56,1 | 54,1 | 55,3 | 54,2 | 55,7 |
| M 100 RT | MPa | 5,2 | 5,8 | 5,8 | 5,9 | 5 | 5,4 | 5,4 | 5,6 |
| E' (8%) | MPa | 11,7 | 12,2 | 12,4 | 12,8 | 10,6 | 10,8 | 11,3 | 11,5 |
| Tan d (max) | | 0,193 | 0,186 | 0,185 | 0,183 | 0,195 | 0,188 | 0,194 | 0,187 |

Wie an den Tabellen 1 bis 6 erkennbar, werden überraschenderweise nur mit der Kombination aus a) Butadien-Kautschuk in den erfindungsgemäßen Mengen und c) dem Oligomerengemisch von TMQ, enthaltend 70 bis 100 Gew.-% an Dimeren und Trimeren verbesserte Rückprallelastizitäten bei 70 °C und ein verbesserter Wärmeaufbau (geringere Werte für den Hystereseverlust, Tangens Delta) und damit weiter verbesserte Rollwiderstandsindikatoren sowie verbesserte Handling-Indikatoren erzielt.

Die Mischung E2 zeigt mit a) 50 phr BR und c) dem Oligomerengemisch von TMQ enthaltend 70 bis 100 Gew.-% an Dimeren und Trimeren zusätzlich überraschenderweise deutlich verbesserte Ermüdungsbeständigkeiten, insbesondere gegenüber Rissbildung und ggf. Bruch, nach der Alterung.

## Patentansprüche

1. Schwefelvernetzbare Kautschukmischung enthaltend wenigstens folgende Bestandteile:
a) 30 bis 95 phr, bevorzugt 40 bis 95 phr, besonders bevorzugt 50 bis 95 phr, wenigstens eines Butadien-Kautschuks; und
b) 5 bis 70 phr, bevorzugt 5 bis 60 phr, besonders bevorzugt 5 bis 50 phr, wenigstens eines weiteren Kautschuks; und
c) 0,1 bis 3,0 phr, bevorzugt 0,2 bis 3 phr, besonders bevorzugt 0,2 bis 2,5 phr, eines Oligomerengemisches von 2,2,4-Trimethyl-1,2-dihydrochinolin, wobei das Gemisch 70 bis 100 Gew.-% an Dimeren und Trimeren von 2,2,4-Trimethyl-1,2-dihydrochinolin enthält.

2. Schwefelvernetzbare Kautschukmischung nach Anspruch 1, **dadurch gekennzeichnet, dass** der wenigstens eine weitere Kautschuk b) wenigstens ein Dienkautschuk ist, der bevorzugt ausgewählt ist aus der Gruppe bestehend aus natürlichem Polyisopren (NR) und synthetischem Polyisopren (IR) und Styrol-Butadien-Kautschuk (SBR), wobei der Styrol-Butadien-Kautschuk bevorzugt aus lösungspolymerisiertem Styrol-Butadien-Kautschuk (SSBR) ausgewählt ist.

3. Schwefelvernetzbare Kautschukmischung nach Anspruch 1 oder 2, **dadurch gekennzeichnet, dass** sie als Kautschuk b) 5 bis 40 phr natürliches Polyisopren (NR) enthält, wobei die schwefelvernetzbare Kautschukmischung bevorzugt a) 60 bis 80 phr wenigstens eines Butadien-Kautschuks und b) 20 bis 40 phr wenigstens eines natürlichen Polyisoprens (NR) enthält.

4. Schwefelvernetzbare Kautschukmischung nach Anspruch 1 oder 2, **dadurch gekennzeichnet, dass** sie a) 40 bis 60 phr, bevorzugt 45 bis 55 phr, insbesondere 50 phr, wenigstens eines Butadien-Kautschuks und b) 40 bis 60 phr, 45 bis 55 phr, insbesondere 50 phr, wenigstens eines natürlichen Polyisoprens (NR) enthält.

5. Schwefelvernetzbare Kautschukmischung nach einem der vorherigen Ansprüche, **dadurch gekennzeichnet, dass** der wenigstens eine Butadien-Kautschuk a) einen cis-1,4-Anteil von 90 bis 98 %, bevorzugt 94 bis 98 %, aufweist.

6. Schwefelvernetzbare Kautschukmischung nach einem der vorherigen Ansprüche, **dadurch gekennzeichnet, dass** das Oligomerengemisch c) 73 bis 100 Gew.-%, bevorzugt 74 bis 100 Gew.-%, besonders bevorzugt 74 bis 95 Gew.-%, ganz besonders bevorzugt 74 bis 85 Gew.-%, an Dimeren und Trimeren von 2,2,4-Trimethyl-1,2-dihydrochinolin enthält.

7. Schwefelvernetzbare Kautschukmischung nach einem der vorherigen Ansprüche, **dadurch gekennzeichnet, dass** das Oligomerengemisch die Substanz Isopropyliden Bis Anilin in einer Menge von weniger als 0,05 Gew.-%, bevorzugt weniger als 0,02 Gew.-%, besonders bevorzugt weniger als 0,01 Gew.-%, wiederum bevorzugt 0 bis 0,0099 Gew.-% enthält.

8. Schwefelvernetzbare Kautschukmischung nach einem der vorherigen Ansprüche, **dadurch gekennzeichnet, dass** das Oligomerengemisch das Monomer 2,2,4-Trimethyl-1,2-dihydrochinolin in einer Menge von weniger als 0,7 Gew.-%, bevorzugt 0 bis 0,5 Gew.-%, enthält.

9. Schwefelvernetzbare Kautschukmischung nach einem der vorherigen Ansprüche, **dadurch gekennzeichnet, dass** sie d) wenigstens einen Füllstoff, bevorzugt 20 bis 500 phr, besonders bevorzugt 20 bis 400 phr, wiederum bevorzugt 20 bis 180 phr, ganz besonders bevorzugt 45 bis 180 phr, wenigstens eines Rußes, enthält.

10. Vulkanisat, welches durch Schwefelvulkanisation wenigstens einer Kautschukmischung nach einem der Ansprüche 1 bis 9 erhalten ist.

11. Fahrzeugreifen, **dadurch gekennzeichnet, dass** er in wenigstens einem Bauteil wenigstens ein Vulkanisat nach Anspruch 10 aufweist.

12. Fahrzeugreifen nach Anspruch 11, **dadurch gekennzeichnet, dass** er wenigstens ein Vulkanisat nach Anspruch 10 wenigstens in einem äußeren Bauteil, bevorzugt im Hornprofil, Laufstreifen und/oder der Seitenwand, aufweist.

13. Verfahren zur Herstellung der schwefelvernetzbaren Kautschukmischung nach Anspruch 1 umfassend wenigstens die folgenden Verfahrensschritte:
X1) Bereitstellen von a) 30 bis 95 phr wenigstens eines Butadien-Kautschuks; und
X2) Bereitstellen von b) 5 bis 70 phr wenigstens eines weiteren Kautschuks; und
X3) Bereitstellen von c) 0,1 bis 3,0 phr eines Oligomerengemisches von 2,2,4-Trimethyl-1,2-dihydrochinolin, wobei das Gemisch 70 bis 100 Gew.-% an Dimeren und Trimeren von 2,2,4-Trimethyl-1,2-dihydrochinolin enthält; und
X4) Vermischen der Bestandteile aus den Schritten X1), X2) und X3),
wobei sich die Angaben in phr auf 100 Gewichtsteile der gesamten Masse aller Kautschuke in der hergestellten schwefelvernetzbaren Kautschukmischung beziehen.

14. Verwendung der schwefelvernetzbaren Kautschukmischung nach einem der Ansprüche 1 bis 9 zur Herstellung von technischen Gummiartikeln, wie Bälge, Förderbänder, Luftfedern, Gurte, Riemen oder Schläuche, sowie Schuhsohlen.

## Claims

1. Sulfur-crosslinkable rubber mixture containing at least the following constituents:
a) 30 to 95 phr, preferably 40 to 95 phr, particularly preferably 50 to 95 phr, of at least one butadiene rubber; and
b) 5 to 70 phr, preferably 5 to 60 phr, particularly preferably 5 to 50 phr, of at least one further rubber; and
c) 0.1 to 3.0 phr, preferably 0.2 to 3 phr, particularly preferably 0.2 to 2.5 phr, of an oligomer mixture of 2,2,4-trimethyl-1,2-dihydroquinoline, wherein the mixture contains 70% to 100% by weight of dimers and trimers of 2,2,4-trimethyl-1,2-dihydroquinoline.

2. Sulfur-crosslinkable rubber mixture according to Claim 1, **characterized in that** the at least one further rubber b) is at least one diene rubber preferably selected from the group consisting of natural polyisoprene (NR) and synthetic polyisoprene (IR) and styrene-butadiene rubber (SBR), wherein the styrene-butadiene rubber is preferably selected from solution-polymerized styrene-butadiene rubber (SSBR).

3. Sulfur-crosslinkable rubber mixture according to Claim 1 or 2, **characterized in that** it contains as rubber b) 5 to 40 phr of natural polyisoprene (NR), wherein the sulfur-crosslinkable rubber mixture preferably contains a) 60 to 80 phr of at least one butadiene rubber and b) 20 to 40 phr of at least one natural polyisoprene (NR).

4. Sulfur-crosslinkable rubber mixture according to Claim 1 or 2, **characterized in that** it contains a) 40 to 60 phr, preferably 45 to 55 phr, in particular 50 phr, of at least one butadiene rubber and b) 40 to 60 phr, 45 to 55 phr, in particular 50 phr, of at least one natural polyisoprene (NR).

5. Sulfur-crosslinkable rubber mixture according to any of the preceding claims, **characterized in that** the at least one butadiene rubber a) has a cis-1,4 content of 90% to 98%, preferably 94% to 98%.

6. Sulfur-crosslinkable rubber mixture according to any of the preceding claims, **characterized in that** the oligomer mixture c) contains 73% to 100% by weight, preferably 74% to 100% by weight, particularly preferably 74% to 95% by weight, very particularly preferably 74% to 85% by weight, of dimers and trimers of 2,2,4-trimethyl-1,2-dihydroquinoline.

7. Sulfur-crosslinkable rubber mixture according to any of the preceding claims, **characterized in that** the oligomer mixture contains the substance isopropylidene bis aniline in an amount of less than 0.05% by weight, preferably less than 0.02% by weight, particularly preferably less than 0.01% by weight, in turn preferably 0% to 0.0099% by weight.

8. Sulfur-crosslinkable rubber mixture according to any of the preceding claims, **characterized in that** the oligomer mixture contains the monomer 2,2,4-trimethyl-1,2-dihydroquinoline in an amount of less than 0.7% by weight, preferably 0% to 0.5% by weight.

9. Sulfur-crosslinkable rubber mixture according to any of the preceding claims, **characterized in that** it contains d) at least one filler, preferably 20 to 500 phr, particularly preferably 20 to 400 phr, in turn preferably 20 to 180 phr, very particularly preferably 45 to 180 phr, of at least one carbon black.

10. Vulcanizate obtained by sulfur vulcanization of at least one rubber mixture according to any of Claims 1 to 9.

11. Vehicle tyre, **characterized in that** it comprises at least one vulcanizate according to Claim 10 in at least one component.

12. Vehicle tyre according to Claim 11, **characterized in that** it comprises at least one vulcanizate according to Claim 10 at least in an outer component, preferably in the flange profile, tread and/or sidewall.

13. Process for producing the sulfur-crosslinkable rubber mixture according to Claim 1 comprising at least the process steps of:
X1) providing a) 30 to 95 phr of at least one butadiene rubber; and
X2) providing b) 5 to 70 phr of at least one further rubber; and
X3) providing c) 0.1 to 3.0 phr of an oligomer mixture of 2,2,4-trimethyl-1,2-dihydroquinoline, wherein the mixture contains 70% to 100% by weight of dimers and trimers of 2,2,4-trimethyl-1,2-dihydroquinoline; and
X4) mixing the components from steps X1), X2) and X3),
wherein the reported amounts in phr relate to 100 parts by weight of the total mass of all rubbers in the produced sulfur-crosslinkable rubber mixture.

14. Use of the sulfur-crosslinkable rubber mixture according to any of Claims 1 to 9 for the production of technical rubber articles, such as bellows, conveyor belts, air springs, belts, drive belts or hoses, and also shoe soles.

## Revendications

1. Mélange de caoutchouc réticulable au soufre, contenant au moins les constituants suivants :
a) 30 à 95 pce, de préférence 40 à 95 pce, de manière particulièrement préférée 50 à 95 pce,
d'au moins un caoutchouc butadiène ; et
b) 5 à 70 pce, de préférence 5 à 60 pce, de manière particulièrement préférée 5 à 50 pce, d'au moins un autre caoutchouc ; et
c) 0,1 à 3,0 pce, de préférence 0,2 à 3 pce, de manière particulièrement préférée 0,2 à 2,5 pce, d'un mélange d'oligomères de 2,2,4-triméthyl-1,2-dihydroquinoléine, le mélange contenant 70 à 100 % en poids de dimères et de trimères de 2,2,4-triméthyl-1,2-dihydroquinoléine.

2. Mélange de caoutchouc réticulable au soufre selon la revendication 1, **caractérisé en ce que** l'au moins un autre caoutchouc b) est au moins un caoutchouc diénique, qui est de préférence choisi dans le groupe constitué par le polyisoprène naturel (NR) et le polyisoprène synthétique (IR) et le caoutchouc styrène-butadiène (SBR), le caoutchouc styrène-butadiène étant de préférence choisi parmi le caoutchouc styrène-butadiène polymérisé en solution (SSBR).

3. Mélange de caoutchouc réticulable au soufre selon la revendication 1 ou 2, **caractérisé en ce qu'**il contient en tant que caoutchouc b) 5 à 40 pce de polyisoprène naturel (NR), la composition de caoutchouc réticulable au soufre contenant de préférence a) 60 à 80 pce d'au moins un caoutchouc de butadiène et b) 20 à 40 pce d'au moins un polyisoprène naturel (NR).

4. Mélange de caoutchouc réticulable au soufre selon la revendication 1 ou 2, **caractérisé en ce qu'**il contient a) 40 à 60 pce, de préférence 45 à 55 pce, notamment 50 pce, d'au moins un caoutchouc butadiène et b) 40 à 60 pce, 45 à 55 pce, notamment 50 pce, d'au moins un polyisoprène naturel (NR).

5. Mélange de caoutchouc réticulable au soufre selon l'une des revendications précédentes, **caractérisé en ce que** l'au moins un caoutchouc butadiène a) présente une teneur en cis-1,4 de 90 à 98 %, de préférence de 94 à 98 %.

6. Mélange de caoutchouc réticulable au soufre selon l'une des revendications précédentes, **caractérisé en ce que** le mélange d'oligomères c) contient de 73 à 100 % en poids, de préférence de 74 à 100 % en poids, de manière particulièrement préférée de 74 à 95 % en poids, de manière tout particulièrement préférée de 74 à 85 % en poids, de dimères et de trimères de 2,2,4-triméthyl-1,2-dihydroquinoléine.

7. Mélange de caoutchouc réticulable au soufre selon l'une des revendications précédentes, **caractérisé en ce que** le mélange d'oligomères contient la substance isopropylidène bis aniline en une quantité inférieure à 0,05 % en poids, de préférence inférieure à 0,02 % en poids, de manière particulièrement préférée inférieure à 0,01 % en poids, de nouveau de préférence de 0 à 0,0099 % en poids.

8. Mélange de caoutchouc réticulable au soufre selon l'une des revendications précédentes, **caractérisé en ce que** le mélange d'oligomères contient le monomère 2,2,4-triméthyl-1,2-dihydroquinoléine en une quantité inférieure à 0,7 % en poids, de préférence de 0 à 0,5 % en poids.

9. Mélange de caoutchouc réticulable au soufre selon l'une des revendications précédentes, **caractérisé en ce qu'**il contient d) au moins une charge, de préférence 20 à 500 pce, de manière particulièrement préférée 20 à 400 pce, de manière à nouveau préférée 20 à 180 pce, de manière tout particulièrement préférée 45 à 180 pce, d'au moins un noir de carbone.

10. Produit de vulcanisation, qui est obtenu par vulcanisation par le soufre d'au moins un mélange de caoutchouc selon l'une des revendications 1 à 9.

11. Pneumatique pour véhicule, **caractérisé en ce qu'**il présente dans au moins un élément au moins un produit de vulcanisation selon la revendication 10.

12. Pneumatique de véhicule selon la revendication 11, **caractérisé en ce qu'**il présente au moins un produit de vulcanisation selon la revendication 10 au moins dans un composant extérieur, de préférence dans le profil de rebord, la bande de roulement et/ou le flanc.

13. Procédé de préparation du mélange de caoutchouc réticulable au soufre selon la revendication 1, comprenant au moins les étapes de procédé suivantes :
X1) la fourniture de a) 30 à 95 pce d'au moins un caoutchouc butadiène ; et
X2) la fourniture de b) 5 à 70 pce d'au moins un autre caoutchouc ; et
X3) la fourniture de c) 0,1 à 3,0 pce d'un mélange d'oligomères de 2,2,4-triméthyl-1,2-dihydroquinoléine, le mélange contenant 70 à 100 % en poids de dimères et de trimères de 2,2,4-triméthyl-1,2-dihydroquinoléine ; et
X4) le mélange des constituants des étapes X1), X2) et X3),
où les données en pce se rapportent à 100 parties en poids de la masse totale de tous les caoutchoucs dans la composition de caoutchouc réticulable au soufre préparée.

14. Utilisation du mélange de caoutchouc réticulable au soufre selon l'une des revendications 1 à 9 pour la fabrication d'articles techniques en caoutchouc, tels que des soufflets, des bandes transporteuses, des ressorts pneumatiques, des sangles, des courroies ou des tuyaux, ainsi que des semelles de chaussures.
